# EUROPEAN PATENT APPLICATION

(11) **EP 1 645 692 A1**
(43) Date of publication of application: **12.04.2006**
(21) Application number: 05021970.8
(22) Date of filing: 07.10.2005
(51) Int. Cl.: E03D 5/10

(54) **Electro-mechanical flush mechanism**

(30) Priority: 08.10.2004 US 617103 P
(71) Applicant: Dometic Sanitation Corporation, Big Prairie OH 44611-0038 (US)
(72) Inventor: Sigler, James A., Perrysville Ohio 44864-9739 (US)
(74) Representative: Grosse, Wolfgang

(57) **Abstract**

A toilet for a recreational vehicle, boat or the like is provided, which includes an electromechanical flush mechanism. The flush mechanism includes an actuating mechanism for activating either a flush cycle or an add water cycle. The flush mechanism further includes a flush valve (22), a water inlet valve, a motor (30), a drive mechanism and a spring (40). During operation of the flush mechanism, the spring (40) biases the drive mechanism (32) in a direction such that the flush valve (22) rotates. A motor arm (38) connected to the motor (30) moves the drive mechanism (32) in a direction such that the flush valve (22) rotates in an opposite direction.

## Description

This application claims the benefit of U.S. Provisional Patent Application No. 60/617,103 filed on October 8, 2004.

### FIELD OF INVENTION

The present invention relates to toilets. More particularly, the present invention relates to a toilet and flush mechanism that is suitable for a boat, recreational vehicle (RV), bus or the like.

### BACKGROUND OF THE INVENTION

The toilet according to the present invention may either be of the gravity drop through type or of the vacuum type (such as generally shown in U.S. Patent No. 5,621,924, the disclosure of which is hereby incorporated by reference).

There currently exist in the marine and RV industries, vacuum toilets and gravity drop toilets that are foot pedal or lever operated. These are manually operated toilets where a flush valve is opened by the operator and remains open as long as the operator activates the pedal or lever.

In regard to vacuum toilets, if the flush valve is open for too short a period of time, insufficient water may accompany the waste, which may increase the possibility of the system plugging. A short duration flush also limits the amount of vacuum utilized in the flush and reduces the force that macerates the waste, which also increases the possibility of the system plugging. If the flush valve is open for an extended period of time, then excessive water is utilized. Additionally, if a second flush cycle is activated before the full level of vacuum is restored, the reduced level of vacuum may not have sufficient force to macerate the sewage, and system plugging may result.

In regard to gravity drop toilets, if the flush valve is open for too short a period of time, then repeated opening of the flush valve may be required to clear the toilet bowl. If the flush valve is open for an extended period of time, then excessive water is utilized and it increases the possibility that malodor from the holding tank may enter the bathroom via the flush valve.

Because these toilets are manually operated, the timing between the flush valve and water valve is fixed and allows only one residual water level. Further, while "dry camping" or in rough seas, a lower level of residual water is desirable. When water is plentiful or in calm seas, a higher level of residual water may be desired.

Thus, what is needed is a toilet for use in the marine and RV industries that overcomes the above mentioned disadvantages.

### SUMMARY OF THE INVENTION

In accordance with one aspect, a flush mechanism for a toilet is provided comprising, a rotatable flush valve, a drive mechanism operatively connected to the flush valve, a motor to move the drive mechanism, and a spring operatively connected to the drive mechanism to bias the drive mechanism in a direction so as to rotate the flush valve.

In accordance with another aspect of the present invention, a flush mechanism for a toilet is provided comprising, a frame, a support structure operatively connected to the frame a rotatable flush valve positioned in the support structure, a rotor shaft operatively connected to the flush valve, a rotor cam coupled to the rotor shaft, a drive arm operatively connected to the rotor cam at a first end and to the frame at a second end, a motor to move the drive arm, and a spring opcrativety connected to the frame at one end and to the rotor cam at the opposite end to bias the drive arm in a direction so as to rotate the flush valve.

In accordance with another aspect of the present invention, a method of flushing a toilet is provided comprising the steps of activating an actuating mechanism, activating a flush/add water switch, energizing a motor and a water inlet valve, disengaging a motor arm from a drive ann slot, biasing a drive mechanism in a direction so as to rotate a flush valve, and re-engaging the motor arm in the drive slot so as to rotate the flush valve to in an opposite direction.

### BRIEF DESCRIPTION OF THE DRAWINGS

These and other aspects and advantages of the present invention will be described in detail with reference to the accompanying drawings, in which:

FIGURE 1 is a side view of an exemplary toilet according to the invention.

FIGURE 2 is a top view of the toilet shown in FIGURE 1.

FIGURE 3 is a front view of the toilet shown in FIGURE 1.

FIGURE 4 is a perspective view of one embodiment of the flush mechanism in a closed state for the toilet of FIGURES 1-3.

FIGURE 5 is a perspective view of the flush mechanism ofFIGURE 4 in an open state.

FIGURE 6 is a perspective view of the flush mechanism of FIGURE 4 in a closing state.

FIGURE 7 is a perspective view of the flush mechanism of FIGURE 4 in an emergency use state.

FIGURE 8 shows a timing chart showing the operation of the toilet in accordance with the present invention.

### DETAILED DESCRIPTION OF PREFERRED EMBODIMENTS

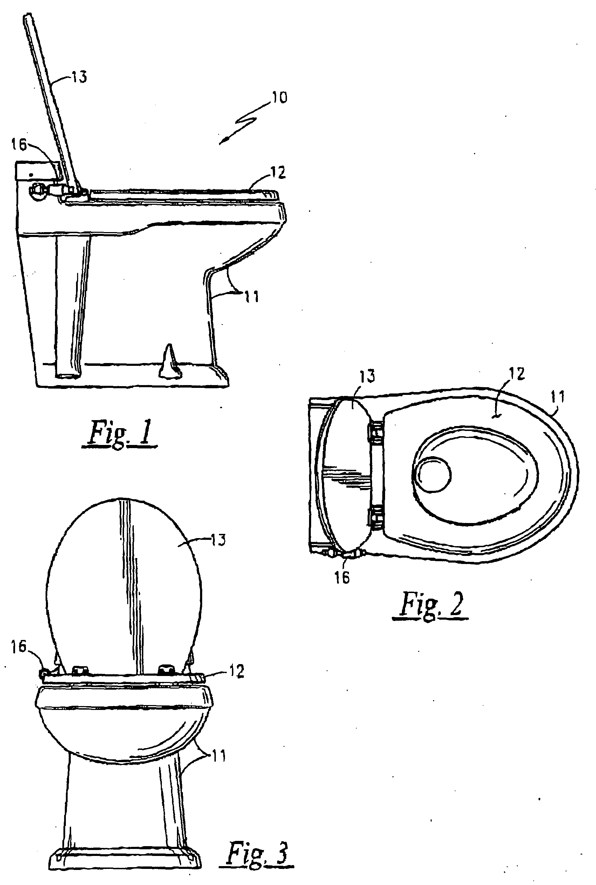

FIGURES 1-3 show a toilet 10 (either vacuum or drop through) in accordance with the present invention having a substantially all china one-piece combination bowl and base 11, with a conventional toilet seat 12 and cover 13. In exterior appearance, the toilet 10 generally resembles conventional toilets in both size and material found in homes, businesses and the like. The toilet 10 includes an actuating mechanism 16 that activates either a flush mode or an add water mode. The actuating mechanism 16 can be any type of actuating mechanism known in the art such as, but not limited to, a foot pedal, a lever, a pushbutton, a rocker switch, etc. Further, the actuating mechanism can be located on the toilet, as shown in FIGURES 1-3, or it can be located near the toilet, for example, on a wall, a cabinet, a counter, etc. located near the toilet.

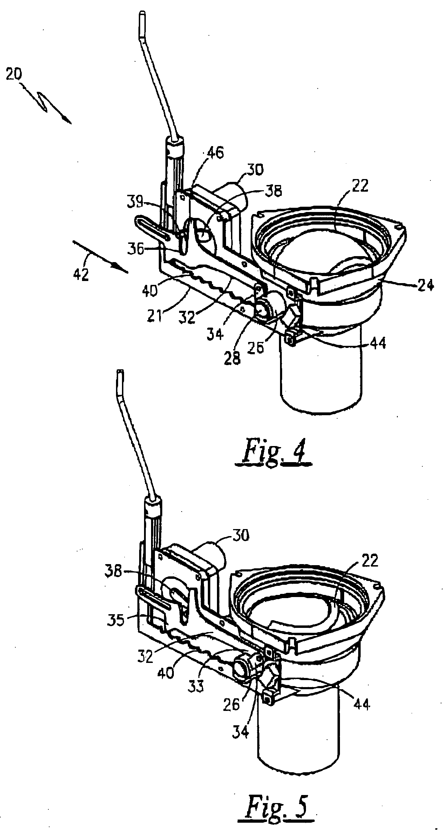

FIGURE 4 shows a flush mechanism 20 in a closed state in accordance with the present invention. The flush mechanism 20 includes a frame 21 and a flush valve 22, which is positioned in a ring-like cylindrical-support structure 24. The support structure 24 is connected to one end of the frame 21 as shown in FIGURE 4 and provides support for the flush mechanism 20. The support structure 24 can be connected to the frame by any means known in the art such as with screws, rivets, straps, etc. The flush valve 22 is coupled to a rotor cam 26 via a rotor shaft 28. During operation of the flush mechanism 20, described further below, a motor 30 rotates the rotor cam 26, which in turn rotates the rotor shaft 28, which rotates the flush valve 22.

The motor 30 further includes a motor arm 38 to move a drive mechanism such as a drive arm 32 to thereby rotate the rotor cam 26. A first end 33 of the drive arm 32 is connected to a cam pin 34. The cam pin 34 is connected to the rotor cam 26 and extends in an outward direction from the rotor cam 26. A second end 35 of the drive arm 32 is connected to the frame 21 at an end opposite the support structure 24- The second end 35 of the drive arm 32 further includes a drive arm slot 36, which receives the motor arm 38. A spring 40 is attached to the frame 21 at one end and to the rotor cam 26 at the opposite end. During operation of the flush mechanism 20, the spring 40 biases the drive arm 32 in a direction such that the flush valve 22 rotates to an open position. When the flush valve 22 is in a closed position, i.e. the flush mechanism 20 is not in operation, the motor arm 38 engages the drive arm slot 36 thereby preventing the spring 40 from biasing the drive arm 32 to open the flush valve 22.

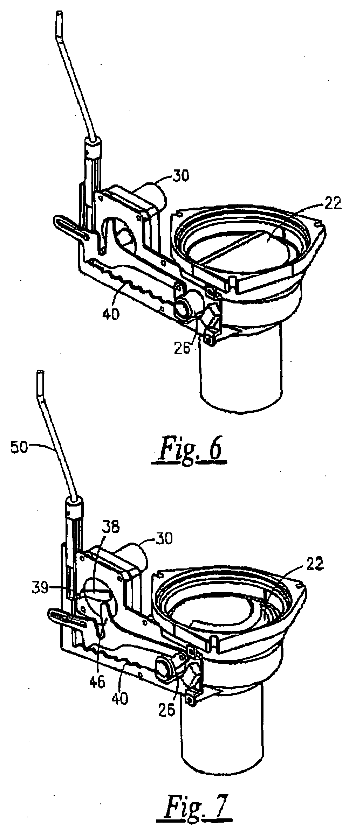

Referring to FIGURES 4-7, operation of the flush mechanism will now be described. In the flush mode the user activates the flush mechanism 20 by activating the actuating mechanism 16. Once the flush mechanism 20 is activated a flush/add water switch is momentarily activated, for example for 0.5 seconds, thereby initially energizing the motor 30 and a water inlet valve. The motor 30 begins to rotate the motor arm 38 in such a manner that the motor arm 38 is disengaged from the drive arm slot 36. As the motor arm 38 disengages from the drive arm slot 36 the drive arm 32 is released and the spring 40 begins to rotate the rotor cam 26 which in turn biases the drive arm 32 in the direction indicated by the arrow 42. As the drive arm 32 is further biased in the direction of the arrow 42, the rotor cam 26 rotates, which rotates the rotor shaft 28 thereby rotating the flush valve 22 to an open position as shown in FIGURE 5. As the motor 3 0 continues to rotate, the motor arm 3 8 re-engages the drive arm slot 36 thereby moving the drive arm 32 in a direction opposite that of the arrow 42. As the drive arm 32 moves in the direction opposite to the arrow 42 the rotor cam 26 rotates in a direction such that the flush valve 22 begins to close as shown in FIGURE 6. Once the motor arm 38 completely re-engages the drive arm slot 36 the flush valve 22 is in a closed position as shown in FIGURE 4, the cam switch 44 is deactivated and the flush cycle is complete.

It should be noted that the present invention is not limited to the embodiment described above or below and shown in the FIGURES. In other words, the present invention can operate in a manner where the spring 40 biases the drive arm 32 in a direction such that the flush valve 22 rotates to a closed position. Further, the motor 30, instead of closing the flush valve 22, can move the drive arm 32 in a direction such that the flush valve 22 rotates to an open position.

As previously mentioned, once the flush mechanism 20 is activated the flush/add water switch is momentarily activated, for example for 0.5 seconds, thereby initially energizing the motor 30 and the water inlet valve. Initial rotation of the rotor cam 26, however, activates a cam switch 44, which provides power to the motor 30 and the water inlet valve after the flush/add water switch is de-energized. Thus, once the user releases the actuating mechanism 16 the cam switch 44 controls the motor 30 and the water inlet valve thereby controlling the duration of the flush cycle. Thus, after the user releases the actuating mechanism 16 the flush valve 22 will remain open for a predetermined period of time which is dependent on the rotation speed of the motor 30.

In the event that the spring 40 does not provide enough initial force to rotate the flush valve 22 a power boost bar 46 may be provided on the drive arm 32 to provide additional force to rotate the flush valve 22, Referring to the embodiment shown in the FIGURES 4-7, as the motor arm 38 rotates a projection 39 on the motor arm 38 contacts the power boost bar 46 and forces it in the direction indicated by the arrow 42, thus, providing additional force to open the flush valve 22.

Referring to FIGURE 7, an emergency flush rod 50 is provided to provide a means to operate the toilet 10 in the event that electrical power is lost or the motor 30 or actuating mechanism 16 are not operable. The flush rod 50 is mechanically attached to the motor arm 38 such that when the user depresses the flush rod 50 the motor arm 38 is disengaged from the drive arm slot 36. Once motor arm 38 is disengaged the spring 40 biases the drive arm 32 in a direction indicated by the arrow 42 thus opening the flush valve 22 as described above. The flush valve 22 will remain open until power is restored to the toilet 10. Once power is restored the cam switch 44 will be activated and the flush cycle will complete its cycle as described above. A return spring is provided to return the flush rod 50 to its normal position after it has been released.

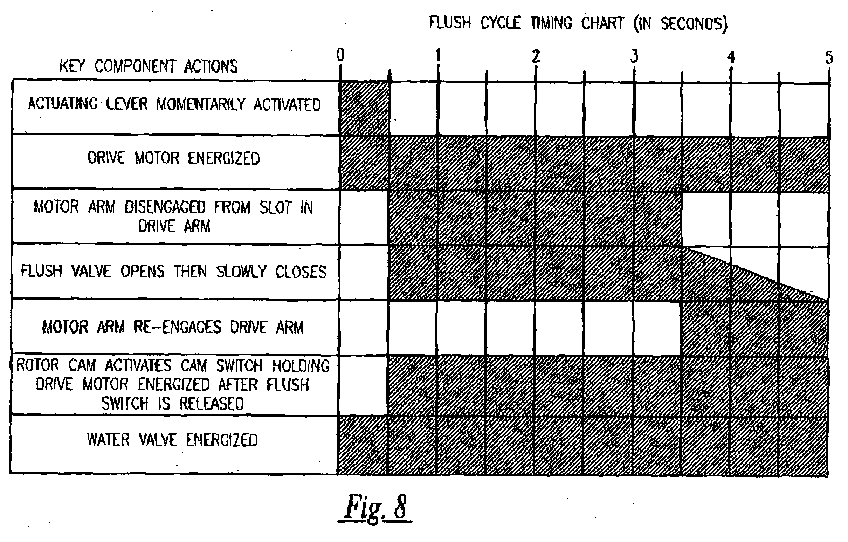

FIGURE 8 shows a timing chart for operating the toilet in the flush mode. The amount of time required for the toilet to compete one flush cycle can be any time period required to provide an adequate flush. For example, the cycle represented in FIGURE 8 has a timing cycle of 5 seconds.

When the user activates the actuating mechanism 16 in the add water mode the water valve is energized to allow water to enter the bowl. The amount of water permitted in the bowl can be controlled manually or by water level switches.

In regard to vacuum toilets, the flush mechanism 20 further includes an optional control feature that prevents the toilet from flushing unless the vacuum is at a sufficient level to provide an adequate flushing force.

While specific embodiments of the invention have been described and illustrated, it is to be understood that these embodiments are provided by way of example only and that the invention is not to be construed as being limited thereto but only by proper scope of the following claims.

## Claims

1. A flush mechanism for a toilet comprising:
a rotatable flush valve;
a drive mechanism operatively connected to the flush valve;
a motor to move the drive mechanism; and,
a spring operatively connected to the drive mechanism to bias the drive mechanism in a direction so as to rotate the flush valve.

2. The flush mechanism of claim 1, wherein the spring biases the drive mechanism in a direction so as to rotate the flush valve to an open position.

3. The flush mechanism of claim 2 further comprising a drive arm slot located at an end of the drive mechanism.

4. The flush mechanism of claim 3 further comprising a motor arm operatively connected to the motor to engage the drive arm slot to thereby move the drive mechanism in a direction so as to rotate the flush valve to a closed position.

5. The flush mechanism of claim 1,wherein the spring biases the drive mechanism in a direction so as to rotate the flush valve to a closed position.

6. The flush mechanism of claim 5 further comprising a drive arm slot located at an end of the drive mechanism.

7. The flush mechanism of claim 6 further comprising a motor ann operatively connected to the motor to engage the drive arm slot to thereby move the drive mechanism in a direction so as to rotate the flush valve to an open position.

8. The flush mechanism of claim 1 further comprising a flush/add water switch to energize the motor and a water inlet valve for a limited period of time.

9. The flush mechanism of claim 8 further comprising a cam switch to energize the motor and the water inlet valve after initial energization by the flush/add water switch.

10. The flush mechanism of claim 1 further comprising a power boost bar operatively connected to the drive mechanism.

11. The flush mechanism of claim 10 further comprising a projection operatively attached to the motor arm to contact the power boost bar to move the drive mechanism in a direction so as to rotate the flush valve.

12. The flush mechanism of claim 1 further comprising a flush rod operatively connected to the motor arm to operate the flush mechanism manually.

13. A flush mechanism for a toilet comprising:
a frame;
a support structure operatively connected to the frame;
a rotatable flush valve positioned in the support structure;
a rotor shaft operatively connected to the flush valve;
a rotor cam coupled to the rotor shaft;
a drive arm operatively connected to the rotor cam at a first end and to the frame at a second end;
a motor to move the drive arm; and,
a spring operatively connected to the frame at one end and to the rotor cam at the opposite end to bias the drive arm in a direction so as to rotate the flush valve.

14. The flush mechanism of claim 13, wherein the flush valve rotates to an open position.

15. The flush mechanism of claim 14, wherein the motor moves the drive arm in a direction so as to rotate the flush valve to a closed position.

16. The flush mechanism of claim 13, wherein the flush valve rotates to an closed position.

17. The flush mechanism of claim 16, wherein the motor moves the drive arm in a direction so as to rotate the flush valve to a closed position.

18. A method of flushing a toilet comprising the steps of:
activating an actuating mechanism;
activating a flush/add water switch;
energizing a motor and a water inlet valve;
disengaging a motor arm from a drive arm slot;
biasing a drive mechanism in a direction so as to rotate a flush valve; and,
re-engaging the motor arm in the drive slot so as to rotate the flush valve to in an opposite direction.

19. The method of claim 18, wherein during the step of biasing a drive mechanism in a direction so as to rotate a flush valve to an open position the method further comprising the steps of:
deactivating the flush/add water switch; and,
activating a cam switch to energize the motor and water inlet valve.

20. The method of claim 19 further comprising the steps of:
providing a power boost bar operatively connected to the drive mechanism and a projection operatively connected to the motor arm;
wherein prior to the step of re-engaging the motor arm in the drive slot so as to rotate the flush valve the method further comprising the step of:
contacting the projection to the power boost bar to drive the drive mechanism a direction so as to rotate the flush valve in the same direction.
